# EUROPÄISCHE PATENTSCHRIFT

(11) **EP 4 492 013 B1**
(45) Veröffentlichungstag und Bekanntmachung des Hinweises auf die Patenterteilung: **10.09.2025**
(21) Anmeldenummer: 24172641.3
(22) Anmeldetag: 26.04.2024
(51) Int. Cl.: G01D 5/245, G01D 5/249

(54) **GEBERVORRICHTUNG**
SENSOR DEVICE
DISPOSITIF DE DÉTECTION

(30) Priorität: 13.07.2023 DE 102023118535
(43) Veröffentlichungstag der Anmeldung: 15.01.2025
(73) Patentinhaber: SICK AG, 79183 Waldkirch (DE)
(72) Erfinder: Hopp, David, 78166 Donaueschingen (DE)
(74) Vertreter: Manitz Finsterwald Patent- und Rechtsanwaltspartnerschaft mbB

(56) Entgegenhaltungen:
- EP-B1- 2 342 539

## Beschreibung

Die Erfindung betrifft eine Gebervorrichtung zur Bestimmung einer Absolutposition eines ersten Objekts relativ zu einem zweiten Objekt, die eine an dem ersten Objekt angeordnete Maßverkörperung, eine mit dem zweiten Objekt verbundene Abtasteinrichtung zum Abtasten der Maßverkörperung und eine an die Abtasteinrichtung angeschlossene Auswertungseinheit aufweist, wobei die Maßverkörperung einen Absolutcode mit einer vorgegebenen Gesamtauflösung aufweist und die Auswertungseinheit dazu ausgebildet ist, durch Auslesen eines Codewortes des Absolutcodes aus von der Abtasteinrichtung empfangenen Signalen die Absolutposition zu bestimmen.

Solche Gebervorrichtungen werden in vielfältiger Weise zur Positionsmessung eingesetzt, wobei insbesondere lineare und rotatorische Systeme unterschieden werden. Ein Lineargeber bestimmt eine Verschiebung entlang einer Achse, wohingegen ein Drehgeber oder Drehwinkelsensor der Erfassung eines Drehwinkels oder einer Winkelstellung dient, beispielsweise der Winkelstellung einer Motorwelle. Unter "Position" sind in der vorliegenden Offenbarung also auch Winkelstellungen zu verstehen. Ein wichtiges Anwendungsfeld von Gebervorrichtungen sind sogenannte Motor-Feedback-Systeme, bei welchen ein Drehgeber in einem Servomotor die Ist-Drehzahl der Motorwelle an die Regelung zurückmeldet.

Für die zugrundeliegenden Sensorprinzipien werden verschiedene Technologien eingesetzt, insbesondere optische, magnetische, kapazitive oder induktive. Beispielsweise kann die Maßverkörperung eine Struktur aus transparenten und nichttransparenten Bereichen aufweisen und die Abtasteinrichtung kann eine lichtempfindliche Sensor-Anordnung umfassen. Zusammen ergeben die Code-Elemente eine Codespur oder Maßspur. Magnetische Gebervorrichtungen detektieren beispielsweise mit einem Hall-Sensor entsprechende magnetische Strukturen der Maßverkörperung.

Ein Absolutcode erlaubt die Bestimmung einer eindeutigen Position. Für die Bestimmung von Absolutpositionen gibt es eine Reihe von gängigen Codierungen, wie zum Beispiel Pseudozufallscodes.

Ein Problem besteht in der eingeschränkten Abstufung und Skalierbarkeit gängiger Absolutcodes. Beispielsweise ist die Abstufung binärer Auflösungen, also z.B. 128, 256, 512, 1024, ..., relativ grob. Insbesondere bei Motor-Feedback-Systemen stellt dies ein Problem dar, weil hier häufig an Hohlwellen mit großen und ausgeprägt variablen Durchmessern gemessen werden soll. Wenn zum Beispiel eine Veränderung der physikalischen Länge der Codespur erfolgen soll, kann dies durch eine Veränderung der Länge eines Code-Elements bewerkstelligt werden. Allerdings muss in diesem Fall auch die Abtasteinrichtung angepasst werden, was mit einem relativ hohen Aufwand verbunden ist. Bei Sprüngen zwischen binären Auflösungen ändert sich die Anzahl der für ein Codewort zu detektierenden Code-Elemente, was ebenfalls Änderungen an der Maßverkörperung und/oder an der Abtasteinrichtung erfordert. Ein Hersteller von Gebervorrichtungen muss letztlich eine große Zahl an unterschiedlichen Maßverkörperungen und/oder unterschiedlichen Abtasteinrichtungen bereithalten, was mit hohen Herstellungs- und Lagerhaltungskosten sowie aufwändiger Logistik verbunden ist.

Die EP 2 342 539 B1 offenbart eine Positionscodierung mit zwei geradlinigen und parallel zueinander verlaufenden Codespuren, die aufeinanderfolgende Codesequenzen unterschiedlicher Länge aufweisen, wobei zur Auswertung mehrere Codewörter gleichzeitig mittels einer Abtasteinheit abgetastet werden.

Es ist eine Aufgabe der Erfindung, eine einfachere Anpassung von Gebervorrichtungen der vorstehend genannten Art an anwendungsbezogene Vorgaben und insbesondere den Einsatz des gleichen Typs von Abtasteinrichtung für eine Vielzahl von Messlängen und/oder Durchmessern der Maßverkörperung zu ermöglichen.

Die Lösung der Aufgabe erfolgt durch eine Gebervorrichtung mit den Merkmalen des Anspruchs 1.

Erfindungsgemäß ist vorgesehen, dass die Maßverkörperung wenigstens eine erste Codespur und eine, bevorzugt parallel zu dieser verlaufende, zweite Codespur umfasst und dass die Abtasteinrichtung zum gemeinsamen Abtasten der Codespuren ausgebildet ist, wobei die Codespuren jeweilige Einzelcodes mit vorgegebenen Einzelcode-Auflösungen aufweisen und die Summe der Einzelcode-Auflösungen gleich der vorgegebenen Gesamtauflösung des Absolutcodes ist, wobei die erste Codespur und die zweite Codespur jeweilige Aneinanderreihungen von mehreren identischen Codespur-Segmenten umfassen, wobei die Codespur-Segmente der ersten Codespur länger oder kürzer sind als die Codespur-Segmente der zweiten Codespur und wobei die Auswertungseinheit dazu ausgebildet ist, ein Codewort des ersten Einzelcodes mit einem Codewort des zweiten Einzelcodes zu kombinieren, um das Codewort des Absolutcodes zu bestimmen.

Aufgrund der unterschiedlich langen Codespur-Segmente sind die beiden Codespuren gemäß dem Nonius-Prinzip zueinander verschoben, wodurch die Eindeutigkeit der Positionsbestimmung gewährleistet ist. Die Länge des Absolutcodes kann in einfacher Weise durch Weglassen und/oder Hinzufügen von Codespur-Segmenten unter Aufrechterhaltung der Auflösung angepasst werden. Die Anzahl der Code-Elemente pro Codewort und die Länge der einzelnen Code-Elemente, das heißt die Inkrementlänge, müssen hierfür nicht verändert werden, sondern können gleichbleiben. Somit ist auch keine Bereitstellung einer zusätzlichen Abtasteinrichtung mit angepasster Detektorgeometrie erforderlich. Das heißt die gleiche Art von Abtasteinrichtung kann für eine Vielzahl von Messlängen oder Messdurchmessern verwendet werden.

Die Auswertungseinheit kann eine elektronische Schaltung umfassen und drahtlos oder kabelgebunden mit der Abtasteinrichtung in Signalverbindung stehen. Je nach Anwendung können die Abtasteinrichtung und die Auswertungseinheit integriert ausgeführt oder als separate Einheiten ausgebildet sein.

Unter der Auflösung eines Codes ist die Anzahl der Code-Elemente pro Codewort zu verstehen, bei einem binären Code also die Anzahl der Bits pro Codewort.

Es versteht sich, dass anstelle der hierin genannten zwei Codespuren auch mehr als zwei Codespuren verwendet werden können, auf welche der Absolutcode aufgeteilt sein kann.

Eine Ausführungsform der Erfindung sieht vor, dass der Einzelcode der ersten Codespur ein Nullwort aufweist und der Einzelcode der zweiten Codespur kein Nullwort aufweist oder dass der Einzelcode der ersten Codespur ein Einswort aufweist und der Einzelcode der zweiten Codespur kein Einswort aufweist. Hierdurch wird auf einfache Weise eine Verkürzung der Codespur-Segmente der Codespur ohne Nullwort oder Einswort erzielt. Das Nullwort ist dasjenige Codewort, das ausschließlich aus Code-Elementen mit dem Wert Null zusammengesetzt ist. Ebenso ist das Einswort dasjenige Codewort, das ausschließlich aus Code-Elementen mit dem Wert Eins zusammengesetzt ist.

Aufgrund des fehlenden Nullworts ist der Einzelcode der zweiten Codespur in jedem Codespur-Segment zum Beispiel um ein Bit kürzer als der Einzelcode der ersten Codespur. Hierdurch ergibt sich eine kontinuierliche relative Verschiebung der beiden Einzelcodes zueinander über den Verlauf der Codes, das heißt nach jedem Segment verschieben sich die Codes um ein Bit zueinander, was dem Nonius-Prinzip entspricht. Werden nun beispielsweise parallel immer jeweils zwei Bit der beiden Einzelcodes detektiert, ergibt sich eine Abfolge von 2+2 Bits, welche eindeutig über den Verlauf der beiden Einzelcodes ist.

Erfindungsgemäß ist vorgesehen, dass die Aneinanderreihungen von mehreren identischen Codespur-Segmenten unterschiedliche Spurlängen aufweisen und zur Kompensation der Differenz ein globales Nullwort oder ein globales Einswort an die kürzere Aneinanderreihung angefügt oder in diese eingefügt ist. Die Differenz der Spurlängen wird also vorzugsweise durch Nullen oder Einsen aufgefüllt, so dass die Codespuren insgesamt gleich lang sind.

Durch das Fehlen des Nullworts im Einzelcode der zweiten Codespur wird die maximale Codelänge nicht erreicht, da zum Beispiel immer ein Bit pro Segment fehlt und letztlich ein komplettes Segment des Einzelcodes der ersten Codespur wegfallen müsste, um die Eindeutigkeit zu erhalten. Dieses Problem kann gelöst werden, indem dem Einzelcode der zweiten Codespur ein globales Nullwort zugeordnet wird. Das heißt an einem beliebigen Segment wird an der Stelle des Nullworts diejenige Anzahl an Bits mit der Wertigkeit 0 hinzugefügt, die über alle Segmente betrachtet fehlt. Für einen Absolutcode mit zweimal 2 Bit bedeutet dies, dass bei einer vierfachen Wiederholung des zweiten Codes vier einzelne Bits mit der Wertigkeit 0 fehlen und dementsprechend hinzugefügt werden müssen, um die maximale Codelänge wieder zu erreichen. Eine Segmentlänge des Einzelcodes der ersten Codespur wird also von mehreren Nullwörtern des Einzelcodes der zweiten Codespur ergänzt, was die Kombination der beiden Einzelcodes wieder eindeutig macht. Dabei spielt es im Prinzip keine Rolle, welche Codes kombiniert werden und welche relative Verschiebung sie zueinander aufweisen.

Ebenso spielt es keine Rolle, bei welchem der Einzelcodes das Nullwort fehlt oder welcher Einzelcode mit dem globalen Nullwort ergänzt wird. Das globale Nullwort kann prinzipiell an einer beliebigen Position der betreffenden Codespur eingefügt werden. Es ist jedoch bevorzugt, dass die Einfügung an der Stelle mit den meisten aufeinanderfolgenden Nullen erfolgt, um den Code zu erhalten.

Bevorzugt ist die Anzahl der identischen Codespur-Segmente der ersten Codespur und/oder der zweiten Codespur in Abhängigkeit von einer Länge eines für eine Abtastung nutzbaren Bereichs des ersten Objekts ausgewählt. Aufgrund der erfindungsgemäßen Ausgestaltung kann der Absolutcode unter Beibehaltung der Auflösung segmentweise skaliert werden, so dass der zu messende Bereich besonders günstig abgedeckt werden kann.

Gemäß einer Ausführungsform der Erfindung ist die Auflösung des Einzelcodes der ersten Codespur um höchstens drei und vorzugsweise um höchstens eins von der Auflösung des Einzelcodes der zweiten Codespur verschieden. Eine zumindest näherungsweise hälftige Aufteilung der Auflösung ergibt eine besonders günstige Skalierbarkeit. Prinzipiell ist aber auch eine andere Aufteilung möglich, also zum Beispiel die Kombination eines Codes mit relativ hoher Auflösung mit einem Code mit relativ niedriger Auflösung, solange die Summe der Einzelcode-Auflösungen gleich der Gesamtauflösung ist.

Die Anzahl der identischen Codespur-Segmente der ersten Codespur kann gleich der Anzahl der identischen Codespur-Segmente der zweiten Codespur sein.

Es kann ferner vorgesehen sein, dass die erste Codespur und die zweite Codespur gleich lang sind und/oder eine gleiche Anzahl von Code-Elementen umfassen und/oder dass die erste Codespur und die zweite Codespur Code-Elemente aufweisen, die eine gleich lange Ausdehnung in Spurrichtung aufweisen. Dies ermöglicht eine besonders einfache Gestaltung der Maßverkörperung und der Abtasteinrichtung.

Die Auswertungseinheit kann dazu ausgebildet sein, das Codewort des Absolutcodes durch eine Verkettung eines Codeworts des ersten Einzelcodes mit einem, insbesondere gleichzeitig ausgelesenen, Codewort des zweiten Einzelcodes zu bestimmen. Durch eine Verkettung oder Konkatenation kann das Codewort des Absolutcodes besonders schnell und einfach gebildet werden.

Die Einzelcodes können Pseudozufallscodes sein, die vorzugsweise auf linear rückgekoppelten Schieberegistern beruhen. Bei Pseudozufallscodes oder Pseudo-Random-Codes werden seriell Codewörter detektiert, deren Länge vorzugsweise der Anzahl an Bits der binären Auflösung des Codes entspricht. Die Anzahl der Detektoren der Abtasteinrichtung entspricht bevorzugt mindestens der Anzahl an Bits der binären Auflösung. Jedes Codewort überlappt in beide Richtungen bis auf ein Bit mit seinen Nachbarn, hat also alle Bits bis auf eines mit diesen gemein, so dass bei einer relativen Verschiebung der Maßverkörperung um ein Bit jeweils das nächste Codewort detektiert werden kann. Pseudozufallscodes können derart gestaltet sein, dass sich das Ende der Codespur nahtlos an den Anfang anschließen lässt, da heißt der Überlapp der Codeworte ermöglicht eine kreisförmige Anordnung ohne Unterbrechung des Codes. Grundsätzlich kann es sich bei den Einzel-codes aber um beliebige eindeutige Absolutcodes handeln.

Die Einzelcodes sind vorzugsweise binäre Codes, das heißt Codes, die aus Sequenzen von zwei verschiedenen Symbolen, wie zum Beispiel Einsen und Nullen, zusammengesetzt sind. Diese Ausgestaltung ist besonders einfach. Grundsätzlich können die Einzelcodes jedoch auch höherwertige Codes sein, beispielsweise tertiäre oder quartäre Codes.

Die Abtasteinrichtung kann für jede der Codespuren mehrere Empfangselemente aufweisen, wobei vorzugsweise die Anzahl der für eine Codespur vorgesehenen Empfangselemente wenigstens so groß ist wie die Auflösung des betreffenden Einzelcodes. Mit einer solchen Abtasteinrichtung können Pseudozufallscodes mit einer der Anzahl der Empfangselemente entsprechenden Auflösung unter bitweiser Verschiebung der Abtasteinrichtung gelesen werden. Es könnte auch eine Überabtastung vorgesehen sein, bei welcher mehr Code-Elemente als notwendig erfasst werden. Dies schafft Redundanz und kann für eine Plausibilitätsprüfung genutzt werden.

Der Absolutcode kann ausschließlich durch den ersten Einzelcode und den zweiten Einzelcode definiert sein. Es hat sich gezeigt, dass sich durch zwei parallele und gemäß dem Nonius-Prinzip angeordnete Codespuren für viele praktische Anwendungen eine ausreichende Gesamt-Auflösung erzielen lässt. Im Prinzip könnten jedoch mehr als zwei parallele Codespuren vorgesehen sein. Die Auflösung des Absolutcodes kann bis zum Grenzfall von Ein-Bit-Einzelcodes zerlegt werden, bei welchem die Anzahl der Codespuren der Auflösung des Absolutcodes entspricht. Dieser Grenzfall entspricht einem Binärcode oder Graycode.

Die Auswertungseinheit kann dazu ausgebildet sein, die Absolutposition in Abhängigkeit von dem Codewort des Absolutcodes mittels einer Lookup-Tabelle zu bestimmen. Die Lookup-Tabelle oder Nachschlagetabelle kann eine Zuordnung von Codewörtern zu Positionsnummern oder Positionswerten aufweisen. Vorzugsweise ist die Lookup-Tabelle in einem Speicher der Auswertungseinheit abgelegt.

Die Erfindung betrifft auch ein Verfahren zur Bestimmung einer Absolutposition eines ersten Objekts relativ zu einem zweiten Objekt, bei dem eine an dem ersten Objekt angeordnete Maßverkörperung von einer mit dem zweiten Objekt verbundenen Abtasteinrichtung abgetastet wird, wobei die Maßverkörperung einen Absolutcode mit einer vorgegebenen Gesamtauflösung aufweist und wobei aus einem Codewort des Absolutcodes die Absolutposition bestimmt wird.

Erfindungsgemäß ist vorgesehen, dass die Maßverkörperung wenigstens eine erste Codespur und eine, bevorzugt parallel zu dieser verlaufende, zweite Codespur umfasst, wobei die Codespuren gemeinsam abgetastet werden, wobei die Codespuren jeweilige Einzelcodes mit vorgegebenen Einzelcode-Auflösungen aufweisen und die Summe der Einzelcode-Auflösungen gleich der vorgegebenen Gesamtauflösung des Absolutcodes ist, wobei die erste Codespur und die zweite Codespur jeweilige Aneinanderreihungen von mehreren identischen Codespur-Segmenten umfassen, wobei die Codespur-Segmente der ersten Codespur länger oder kürzer sind als die Codespur-Segmente der zweiten Codespur und wobei ein Codewort des ersten Einzelcodes mit einem Codewort des zweiten Einzelcodes kombiniert wird, um das Codewort des Absolutcodes zu bestimmen.

Aufgrund der unterschiedlich langen Codespur-Segmente sind die beiden Codespuren gemäß dem Nonius-Prinzip zueinander angeordnet, wobei die Eindeutigkeit der Positionsbestimmung gewährleistet ist, gleichzeitig jedoch die Länge des Absolutcodes in einfacher Weise durch Weglassen und/oder Hinzufügen von Codespur-Segmenten angepasst werden kann.

Ein erfindungsgemäßes Verfahren kann Schritte umfassen, die den zuvor unter Bezug auf eine erfindungsgemäße Gebervorrichtung beschriebenen Merkmalen entsprechen.

Weiterbildungen der Erfindung sind auch den abhängigen Ansprüchen, der Beschreibung sowie den beigefügten Zeichnungen zu entnehmen.

Die Erfindung wird nachfolgend beispielhaft unter Bezugnahme auf die Zeichnungen beschrieben.
- Fig. 1: ist eine vereinfachte Darstellung einer erfindungsgemäßen Gebervorrichtung.
- Fig. 2: zeigt zwei Codespuren einer erfindungsgemäßen Gebervorrichtung gemäß einem ersten Ausführungsbeispiel.
- Fig. 3: zeigt eine Abtasteinrichtung einer erfindungsgemäßen Gebervorrichtung während des Abtastens der zwei Codespuren gemäß Fig. 2.
- Fig. 4: zeigt eine Lookup-Tabelle, welche Codewörtern von Einzelcodes der zwei Codespuren gemäß Fig. 2 Codewörter eines Absolutcodes und Positionen zuordnet.
- Fig. 5: zeigt ein Schema zum Skalieren eines Absolutcodes einer erfindungsgemäßen Gebervorrichtung.
- Fig. 6: zeigt zwei Codespuren einer erfindungsgemäßen Gebervorrichtung gemäß einem zweiten Ausführungsbeispiel.
- Fig. 7: zeigt ein Schema zum Skalieren eines alternativen Absolutcodes einer erfindungsgemäßen Gebervorrichtung.

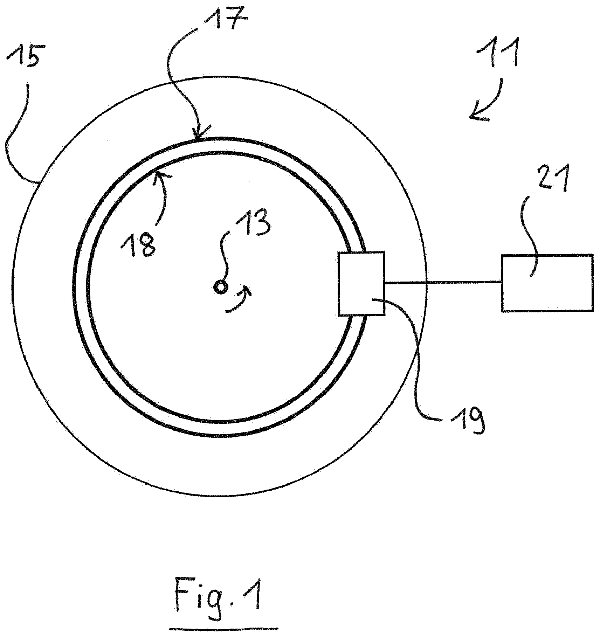

Fig. 1 zeigt schematisch eine Gebervorrichtung 11 in einer Ausführungsform als Drehgeber oder Encoder, beispielsweise für den Einsatz in einem Motor-Feedback-System. Die Gebervorrichtung 11 weist eine mit einer rotierbaren Welle 13 antriebswirksam verbundene Codescheibe als Maßverkörperung 15 auf. Die Maßverkörperung 15 weist eine erste Codespur 17 und eine parallel zu dieser verlaufende zweite Codespur 18 auf. Die hier kreisförmigen Codespuren 17, 18 definieren einen Absolutcode, wie nachfolgend genauer erläutert wird. Zum Abtasten der Codespuren 17, 18 weist die Gebervorrichtung 11 eine Abtasteinrichtung 19 auf, die nicht mit der Welle 13 mitrotiert, sondern an einem nicht dargestellten feststehenden Bauteil angebracht ist. Die Abtasteinrichtung 19 steht mit einer elektronischen Auswertungseinheit 21 in Signalverbindung. Während des Betriebs der Gebervorrichtung 11 empfängt die Auswertungseinheit 21 Signale von der Abtasteinrichtung 19, liest den Absolutcode aus und ermittelt anhand des Absolutcodes die absolute Drehstellung der Welle 13.

Die Codespuren 17, 18 können aufeinanderfolgende Bereiche unterschiedlicher Reflektivität aufweisen, die durch optische Sensoren der Abtasteinrichtung 19 erkannt werden, was in Fig. 1 jedoch nicht im Einzelnen dargestellt ist. Die Codespuren 17, 18 und die Abtasteinrichtung 19 können jedoch auch magnetisch, kapazitiv oder induktiv zusammenwirken, wie dies grundsätzlich bekannt ist.

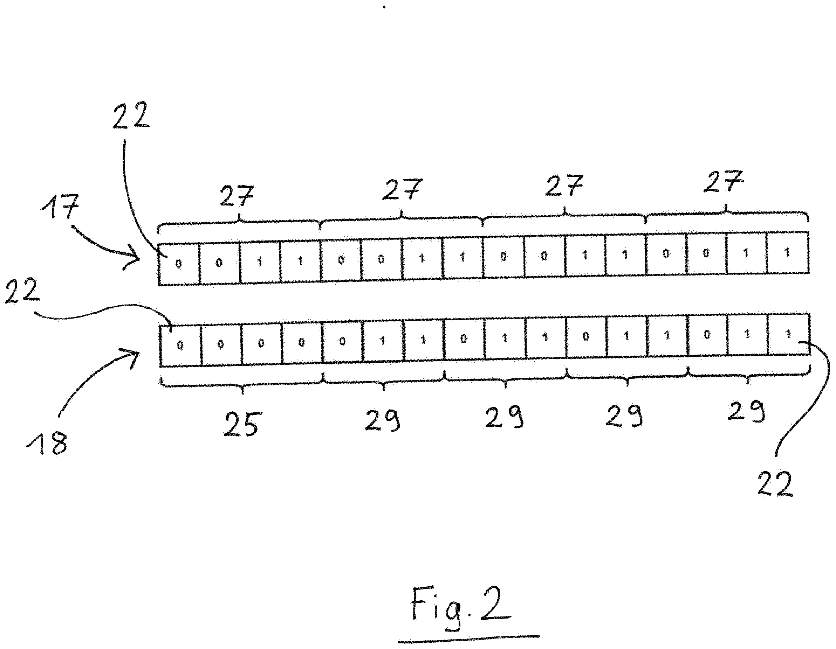

Fig. 2 zeigt beispielhaft die erste Codespur 17 und die zweite Codespur 18, zur Vereinfachung in begradigter Form, wobei die Code-Elemente 22, also die unterscheidbaren Bereiche der Codespuren 17, 18, mit "0" und "1" gekennzeichnet sind. Das heißt bei der gezeigten Ausführungsform entsprechen die Code-Elemente 22 Bits.

Die erste Codespur 17 und die zweite Codespur 18 weisen jeweilige Einzelcodes auf, die auf linear rückgekoppelten Schieberegistern *(linear feedback shift register,* LFSR) beruhen. Bei dem in Fig. 2 dargestellten Ausführungsbeispiel ist der Einzelcode der ersten Codespur 17 ein "4×2 Bit"-Code mit Nullwort. Der Einzelcode der zweiten Codespur 18 ist ein "4×2 Bit"-Code ohne Nullwort. Dem Einzelcode der zweiten Codespur 18 ist ein globales Nullwort 25 zugeordnet.

Wie dargestellt ist die erste Codespur 17 durch eine Aneinanderreihung von vier identischen Codespur-Segmenten 27 von jeweils vier Bit Länge gebildet. Die zweite Codespur 18 umfasst ebenfalls vier identische Codespur-Segmente 29, deren Länge jedoch wegen des fehlenden Nullworts nur jeweils 3 Bit beträgt. Insgesamt sind die Codespuren 17, 18 gleich lang, wobei in der zweiten Codespur 18 die fehlenden Stellen durch das globale Nullwort 25 aufgefüllt sind.

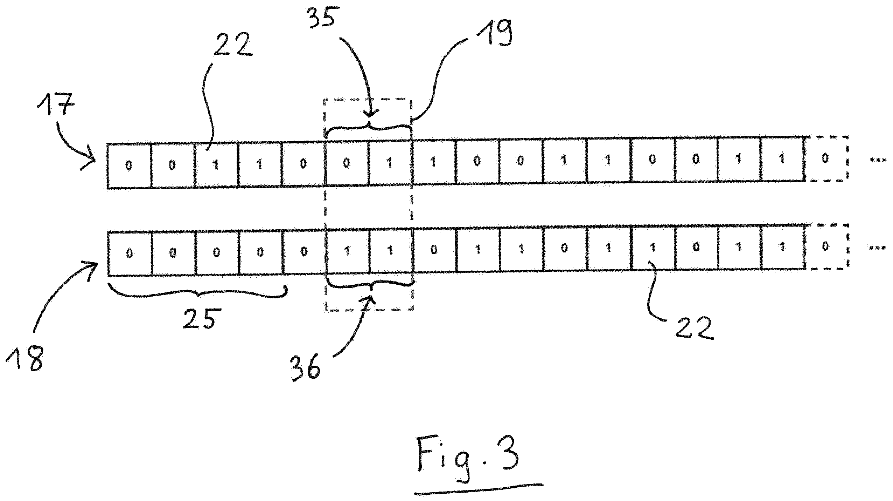

Zum Bilden eines Codeworts des Absolutcodes werden wie in Fig. 3 gezeigt mittels der Abtasteinrichtung 19 zwei Code-Elemente 22 der ersten Codespur 17 und zwei Code-Elemente 22 der zweiten Codespur 18 gemeinsam erkannt, wofür die Abtasteinrichtung 19 mit zweimal zwei Detektoren ausgestattet ist. Die zwei erfassten Bits der ersten Codespur 17 entsprechen einem Codewort 35 des zugehörigen Einzelcodes. Ebenso entsprechen die zwei erfassten Bits der zweiten Codespur 18 einem Codewort 36 des zugehörigen Einzelcodes.

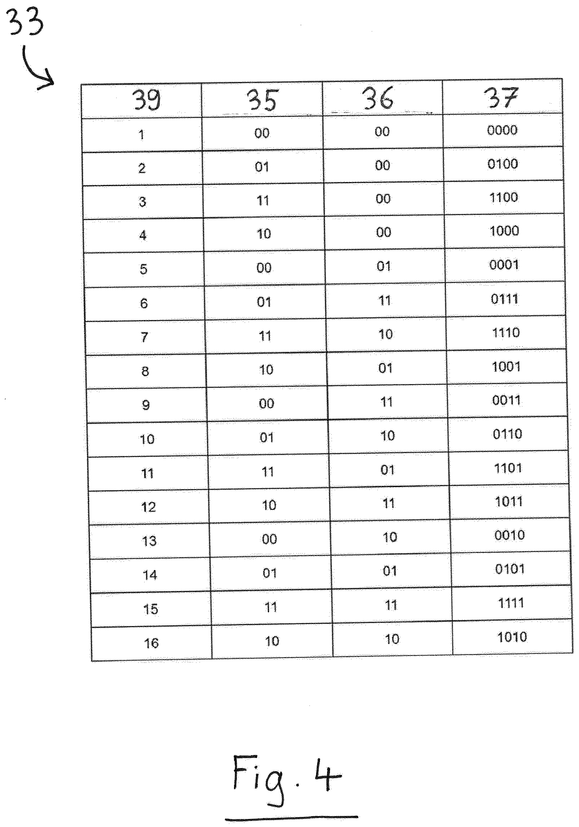

Wie in Fig. 4 gezeigt setzt die Auswertungseinheit 21 (Fig. 1) die zwei Codeworte 35, 36 der Einzelcodes durch Verkettung zu einem Codewort 37 des Absolutcodes zusammen. Mittels einer Lookup-Tabelle 33 wird weiterhin jedem Codewort 37 des Absolutcodes eine Position 39, also eine Positionsnummer oder ein Positionswert, eindeutig zugeordnet. Die in Fig. 3 dargestellte Position der Abtasteinrichtung 19 entspricht der Position 39 mit der Nummer 6.

Bei dem in Fig. 2-4 dargestellten Beispiel weist jeder der beiden Einzelcodes eine binäre Auflösung von zwei Bit auf. Die Gesamtauflösung, also die Auflösung des Absolutcodes, beträgt vier Bit, entsprechend der Summe der Auflösungen der Einzelcodes. Dadurch dass die Codespur-Segmente 27 der ersten Codespur 17 und die Codespur-Segmente 29 der zweiten Codespur 18 ungleich lang sind, das heißt eine ungleiche Anzahl von Bits aufweisen, kann gemäß dem Nonius-Prinzip ein eindeutiger 4-Bit-Absolutcode gebildet werden.

Aufgrund der Kaskadierung durch identische Codespur-Segmente 27, 29 kann der beschriebene Absolutcode leicht skaliert werden. Es ist nämlich nicht erforderlich, die maximale Codelänge auszunutzen. Vielmehr können einzelne Codespur-Segmente 27, 29 weggelassen werden, um die beiden Codespuren 17, 18 zu verkürzen. Auf diese Weise kann die Maßverkörperung 15 (Fig. 1) an eine bestimmte Anwendung angepasst werden, ohne dass hierfür eine Neukonstruktion der Abtasteinrichtung 19 oder eine Änderung der Dimensionen der Code-Elemente 22 notwendig ist.

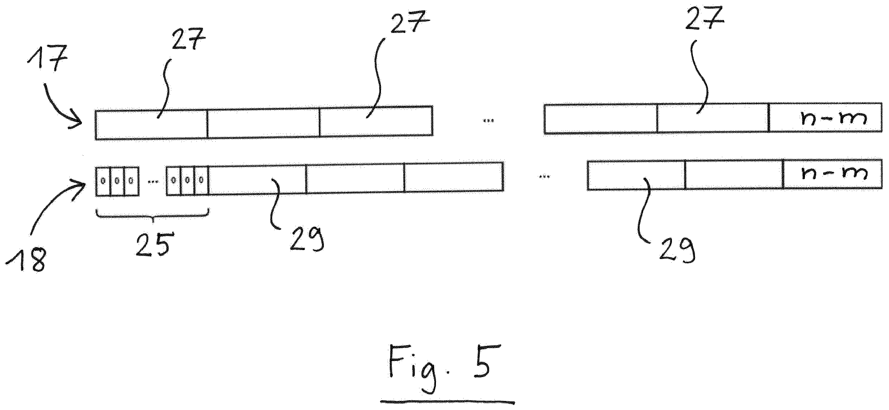

Beispielsweise könnten bei den in Fig. 2 gezeigten Codespuren 17, 18 jeweils das letzte Codespur-Segment 27, 29 weggelassen werden. Ohne weitere Maßnahme würde dann jedoch die relative Anordnung der Codespur-Segmente 27, 29 nicht mehr mit dem ursprünglichen Zustand übereinstimmen. Deshalb wird in der zweiten Codespur 18 zusätzlich eine Stelle des globalen Nullworts 25 gestrichen, damit die relative Anordnung der Codespur-Segmente 27, 29 wieder korrekt ist. Die Fig. 5 veranschaulicht dieses Vorgehen allgemein. **In** der ersten Codespur 17 wird von n Codespur-Segmenten 27 der maximalen Codelänge eine Anzahl von m Codespur-Segmenten 27 weggelassen. **In** der zweiten Codespur 18 wird die gleiche Anzahl m an Codespur-Segmenten 29 weggelassen und zusätzlich wird das globale Nullwort 25 um m Stellen gekürzt.

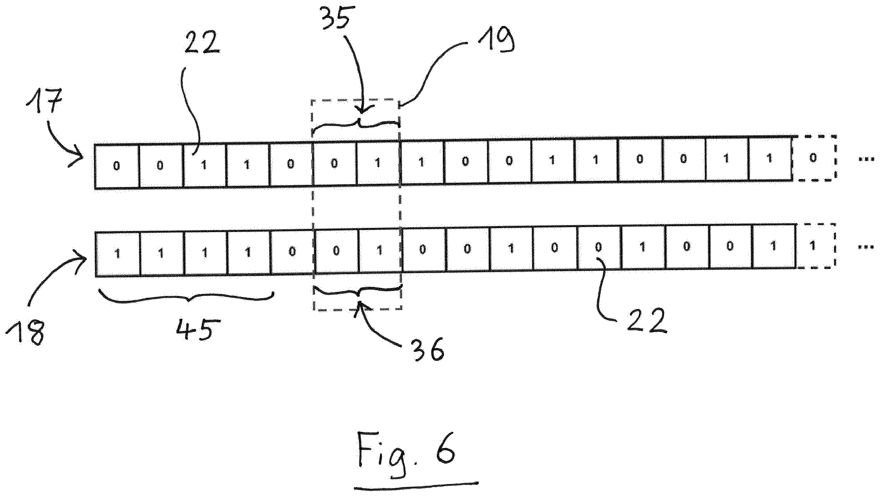

**In** Fig. 6 ist eine alternative Ausgestaltung gezeigt, bei welcher anstelle eines globalen Nullworts ein globales Einswort 45 vorgesehen ist.

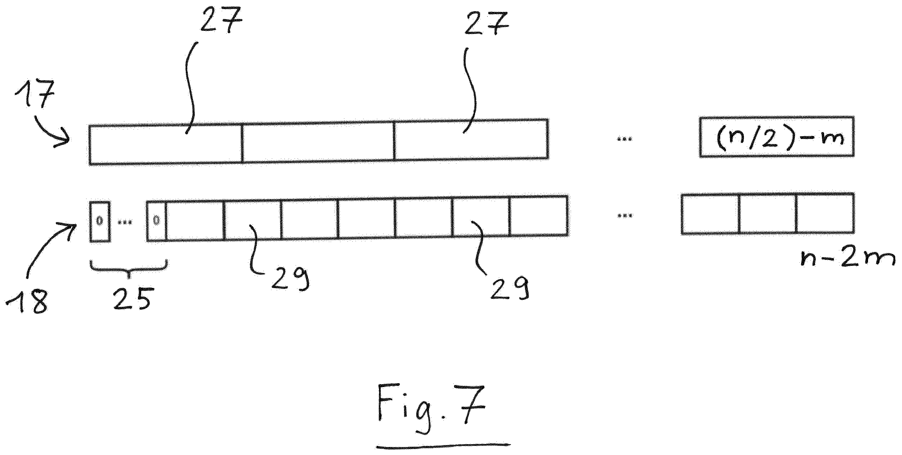

Wie vorstehend erwähnt ist es bevorzugt, dass die Summe der Einzelcode-Auflösungen gleich der vorgegebenen Gesamtauflösung des Absolutcodes ist. Die Aufteilung muss hierbei aber nicht zwingend im Verhältnis 1:1 erfolgen, sondern kann beispielsweise 2:1 betragen. Fig. 7 zeigt ein entsprechendes Beispiel, wobei die erste Codespur 17 eine Anzahl von (n/2)-m Codespur-Segmenten 27 und die zweite Codespur 18 eine Anzahl von n-2m Codespur-Segmenten 29 und zusätzlich ein um *n-2m* Stellen verkürztes Nullwort 25 aufweist.

Erfindungsgemäß werden also anstelle eines einzelnen Absolutcodes mit einer Auflösung c mindestens zwei andere parallele Absolutcodes mit den Auflösungen a und b verwendet, so dass a + b = c weiterhin die gewünschte Maximalcodelänge der Auflösung c ergeben. Die Einzelcodes beider Codespuren 17, 18 umfassen hierbei kaskadierte Segmente, wobei ein Segment jeweils den gesamten Code beinhaltet. Die Anordnung der beiden Einzel-Codes relativ zueinander gemäß dem "Noniusprinzip" stellt die Eindeutigkeit über die Detektion beider Einzelcodes her, wobei die Einführung des globalen Nullworts 25 zum Auffüllen der Maximalcodelänge dient. Durch segmentweises Verkürzen der Einzelcodes kombiniert mit einer bitweisen Verkürzung des globalen Nullworts 25 kann eine segmentweise Skalierung der Gesamtcodelänge erfolgen. Über die Auswahl der Auflösung und die Aufteilung dieser Auflösung in mindestens zwei parallele Codes lässt sich die Maximalcodelänge im Prinzip beliebig festlegen.

Beispielsweise lässt sich die Codelänge bei einer 2×2 Bit Anordnung von 16 auf 12 verkürzen, indem sowohl das letzte Segment des ersten Codes als auch das letzte Segment des zweiten Codes entfällt. Der erste Code besitzt dann nur noch 12 Wörter, während der zweite Code aufgrund des fehlenden Nullworts im entfallenen Segment noch 13 Wörter besitzt. Die Diskrepanz wird behoben, indem beim zweiten Code nicht nur ein Segment entfällt, sondern auch ein Bit des globalen Nullworts. Damit besitzen beide Einzelcodes eine Länge von 12 und sind um ein Segment kürzer, ohne dass die Eindeutigkeit über das Nonius-Prinzip verloren geht. Es wird lediglich die Maximalcodelänge nicht mehr voll ausgeschöpft.

Wenn eine Verkürzung der Codelänge um lediglich ein Codespur-Segment gewünscht ist, kann auch das globale Nullwort entfallen anstelle des Codespur-Segments.

Da mehr als ein Segment entfallen kann, gibt es eine Vielzahl an möglichen Codelängen ausgehend von einer vorgegebenen Maximalcodelänge. Dabei hängt es von der jeweiligen Auflösung der beiden Einzelcodes ab, wie viele Codespur-Segmente und Bits des globalen Nullworts jeweils entfallen müssen. Es kann also vorkommen, dass der Wegfall eines Codespur-Segments des ersten Einzelcodes den Wegfall von zwei oder mehr Codespur-Segmenten sowie zwei oder mehr Bits des globalen Nullworts in der zweiten Codespur erfordert.

Die Verschiebung der Einzelcodes relativ zueinander kann beliebig sein. Ferner kann die segmentweise Verschiebung der Einzelcodes relativ zueinander mehr als ein Bit pro Segment betragen.

Es versteht sich, dass eine erfindungsgemäße Gebervorrichtung 11 auch zur Positionsbestimmung von linear verschiebbaren Bauteilen einsetzbar ist, wobei in diesem Fall die Codespuren 17, 18 geradlinig anstatt wie in Fig. 1 gezeigt kreisförmig sind.

Die Erfindung stellt eine skalierbare Absolutcodierung mit segmentweiser Auflösung zur Verfügung, wobei keine unterschiedlichen Detektoreinheiten für verschiedene Messlängen notwendig sind. Es müssen nur relativ wenige Bits pro Codespur abgetastet werden, was zu einer höheren mechanischen Toleranz führt.

### Bezugszeichenliste:

- 11: Gebervorrichtung
- 13: Welle
- 15: Maßverkörperung
- 17: erste Codespur
- 18: zweite Codespur
- 19: Abtasteinrichtung
- 21: Auswertungseinheit
- 22: Code-Element
- 25: globales Nullwort
- 27: Codespur-Segment der ersten Codespur
- 29: Codespur-Segment der zweiten Codespur
- 33: Lookup-Tabelle
- 35: Codewort des Einzelcodes der ersten Codespur
- 36: Codewort des Einzelcodes der zweiten Codespur
- 37: Codewort des Absolutcodes
- 39: Position
- 45: globales Einswort

## Patentansprüche

1. Gebervorrichtung (11) zur Bestimmung einer Absolutposition (39) eines ersten Objekts relativ zu einem zweiten Objekt, die eine an dem ersten Objekt angeordnete Maßverkörperung (15), eine mit dem zweiten Objekt verbundene Abtasteinrichtung (19) zum Abtasten der Maßverkörperung (15) und eine an die Abtasteinrichtung (19) angeschlossene Auswertungseinheit (21) aufweist, wobei die Maßverkörperung (15) einen Absolutcode mit einer vorgegebenen Gesamtauflösung aufweist und die Auswertungseinheit (21) dazu ausgebildet ist, durch Auslesen eines Codewortes (37) des Absolutcodes aus von der Abtasteinrichtung (19) empfangenen Signalen die Absolutposition (39) zu bestimmen,
wobei die Maßverkörperung (15) wenigstens eine erste Codespur (17) und eine, bevorzugt parallel zu dieser verlaufende, zweite Codespur (18) umfasst und die Abtasteinrichtung (19) zum gemeinsamen Abtasten der Codespuren (17, 18) ausgebildet ist, wobei die Codespuren (17, 18) jeweilige Einzelcodes mit vorgegebenen Einzelcode-Auflösungen aufweisen und die Summe der Einzelcode-Auflösungen gleich der vorgegebenen Gesamtauflösung des Absolutcodes ist,
wobei die erste Codespur (17) und die zweite Codespur (18) jeweilige Aneinanderreihungen von mehreren identischen Codespur-Segmenten (27, 29) umfassen,
wobei die Codespur-Segmente (27) der ersten Codespur (17) länger oder kürzer sind als die Codespur-Segmente (29) der zweiten Codespur (18) und wobei die Auswertungseinheit (21) dazu ausgebildet ist, ein Codewort (35) des ersten Einzelcodes mit einem Codewort (36) des zweiten Einzelcodes zu kombinieren, um das Codewort (37) des Absolutcodes zu bestimmen, wobei die Aneinanderreihungen von mehreren identischen Codespur-Segmenten (27, 29) unterschiedliche Spurlängen aufweisen und zur Kompensation der Differenz ein globales Nullwort (25) oder ein globales Einswort (45) an die kürzere Aneinanderreihung angefügt oder in diese eingefügt ist.

2. Gebervorrichtung nach Anspruch 1,
wobei der Einzelcode der ersten Codespur (17) ein Nullwort aufweist und der Einzelcode der zweiten Codespur (18) kein Nullwort aufweist oder wobei der Einzelcode der ersten Codespur (17) ein Einswort aufweist und der Einzelcode der zweiten Codespur (18) kein Einswort aufweist.

3. Gebervorrichtung nach einem der vorstehenden Ansprüche,
wobei die Anzahl der identischen Codespur-Segmente (27, 29) der ersten Codespur (17) und/oder der zweiten Codespur (18) in Abhängigkeit von einer Länge eines für eine Abtastung nutzbaren Bereichs des ersten Objekts ausgewählt ist.

4. Gebervorrichtung nach einem der vorstehenden Ansprüche,
wobei die Auflösung des Einzelcodes der ersten Codespur (17) um höchstens drei und vorzugsweise um höchstens eins von der Auflösung des Einzelcodes der zweiten Codespur (18) verschieden ist.

5. Gebervorrichtung nach einem der vorstehenden Ansprüche,
wobei die Anzahl der identischen Codespur-Segmente (27) der ersten Codespur (17) gleich der Anzahl der identischen Codespur-Segmente (29) der zweiten Codespur (18) ist.

6. Gebervorrichtung nach einem der vorstehenden Ansprüche,
wobei die erste Codespur (17) und die zweite Codespur (18) gleich lang sind und/oder eine gleiche Anzahl von Code-Elementen (22) umfassen und/oder wobei die erste Codespur (17) und die zweite Codespur (18) Code-Elemente (22) aufweisen, die eine gleich lange Ausdehnung in Spurrichtung aufweisen.

7. Gebervorrichtung nach einem der vorstehenden Ansprüche,
wobei die Auswertungseinheit (21) dazu ausgebildet ist, das Codewort (37) des Absolutcodes durch eine Verkettung eines Codeworts (35) des ersten Einzelcodes mit einem, insbesondere gleichzeitig ausgelesenen, Codewort (36) des zweiten Einzelcodes zu bestimmen.

8. Gebervorrichtung nach einem der vorstehenden Ansprüche,
wobei die Einzelcodes Pseudozufallscodes sind, die vorzugsweise auf linear rückgekoppelten Schieberegistern beruhen.

9. Gebervorrichtung nach einem der vorstehenden Ansprüche,
wobei die Einzelcodes binäre Codes sind.

10. Gebervorrichtung nach einem der vorstehenden Ansprüche,
wobei die Abtasteinrichtung (19) für jede der Codespuren (17, 18) mehrere Empfangselemente aufweist, wobei vorzugsweise die Anzahl der für eine Codespur (17, 18) vorgesehenen Empfangselemente wenigstens so groß ist wie die Auflösung des betreffenden Einzelcodes.

11. Gebervorrichtung nach einem der vorstehenden Ansprüche,
wobei der Absolutcode ausschließlich durch den ersten Einzelcode und den zweiten Einzelcode definiert ist.

12. Gebervorrichtung nach einem der vorstehenden Ansprüche,
wobei die Auswertungseinheit (21) dazu ausgebildet ist, die Absolutposition (39) in Abhängigkeit von dem Codewort (37) des Absolutcodes mittels einer Lookup-Tabelle (33) zu bestimmen.

13. Verfahren zur Bestimmung einer Absolutposition (39) eines ersten Objekts relativ zu einem zweiten Objekt, bei dem eine an dem ersten Objekt angeordnete Maßverkörperung (15) von einer mit dem zweiten Objekt verbundenen Abtasteinrichtung (19) abgetastet wird, wobei die Maßverkörperung (15) einen Absolutcode mit einer vorgegebenen Gesamtauflösung aufweist, wobei aus einem Codewort (37) des Absolutcodes die Absolutposition (39) bestimmt wird,
wobei die Maßverkörperung (15) wenigstens eine erste Codespur (17) und eine, bevorzugt parallel zu dieser verlaufende, zweite Codespur (18) umfasst, wobei die Codespuren (17, 18) gemeinsam abgetastet werden, wobei die Codespuren (17, 18) jeweilige Einzelcodes mit vorgegebenen Einzelcode-Auflösungen aufweisen und die Summe der Einzelcode-Auflösungen gleich der vorgegebenen Gesamtauflösung des Absolutcodes ist,
wobei die erste Codespur (17) und die zweite Codespur (18) jeweilige Aneinanderreihungen von mehreren identischen Codespur-Segmenten (27, 29) umfassen,
wobei die Aneinanderreihungen von mehreren identischen Codespur-Segmenten (27, 29) unterschiedliche Spurlängen aufweisen und zur Kompensation der Differenz ein globales Nullwort (25) oder ein globales Einswort (45) an die kürzere Aneinanderreihung angefügt oder in diese eingefügt ist,
wobei die Codespur-Segmente (27) der ersten Codespur (17) länger oder kürzer sind als die Codespur-Segmente (29) der zweiten Codespur (18),
und wobei ein Codewort (35) des ersten Einzelcodes mit einem Codewort (36) des zweiten Einzelcodes kombiniert wird, um das Codewort (37) des Absolutcodes zu bestimmen.

## Claims

1. An encoder apparatus (11) for determining an absolute position (39) of a first object relative to a second object, said encoder apparatus (11) having a material measure (15) which is arranged at the first object, a scanning device (19) connected to the second object for scanning the material measure (15) and an evaluation unit (21) connected to the scanning device (19), wherein the material measure (15) has an absolute code having a predefined overall resolution and the evaluation unit (21) is configured to determine the absolute position (39) by reading out a code word (37) of the absolute code from signals received from the scanning device (19), wherein the material measure (15) comprises at least a first code track (17) and a second code track (18) which preferably extends parallel thereto and the scanning device (19) is configured for jointly scanning the code tracks (17, 18), wherein the code tracks (17, 18) have respective individual codes having predefined individual code resolutions and the sum of the individual code resolutions is equal to the predefined overall resolution of the absolute code,
wherein the first code track (17) and the second code track (18) comprise respective row arrangements of a plurality of identical code track segments (27, 29),
wherein the code track segments (27) of the first code track (17) are longer or shorter than the code track segments (29) of the second code track (18) and wherein the evaluation unit (21) is configured to combine a code word (35) of the first individual code with a code word (36) of the second individual code in order to determine the code word (37) of the absolute code,
wherein the row arrangements of a plurality of identical code track segments (27, 29) have different track lengths and a global zero word (25) or a global one word (45) is added to or inserted into the shorter row arrangement to compensate for the difference.

2. An encoder apparatus according to claim 1,
wherein the individual code of the first code track (17) has a zero word and the individual code of the second code track (18) does not have a zero word, or wherein the individual code of the first code track (17) has a one word and the individual code of the second code track (18) does not have a one word.

3. An encoder apparatus according to one of the preceding claims,
wherein the number of identical code track segments (27, 29) of the first code track (17) and/or the second code track (18) is selected in dependence on a length of a region of the first object that can be used for a scanning.

4. An encoder apparatus according to any one of the preceding claims,
wherein the resolution of the individual code of the first code track (17) differs by at most three and preferably by at most one from the resolution of the individual code of the second code track (18).

5. An encoder apparatus according to any one of the preceding claims,
wherein the number of identical code track segments (27) of the first code track (17) is equal to the number of identical code track segments (29) of the second code track (18).

6. An encoder apparatus according to any one of the preceding claims,
wherein the first code track (17) and the second code track (18) are of equal length and/or comprise an equal number of code elements (22) and/or wherein the first code track (17) and the second code track (18) have code elements (22) which have an extent of equal length in the track direction.

7. An encoder apparatus according to any one of the preceding claims, wherein the evaluation unit (21) is configured to determine the code word (37) of the absolute code by concatenating a code word (35) of the first individual code with a code word (36) of the second individual code, in particular a code word (36) which is read out simultaneously.

8. An encoder apparatus according to any one of the preceding claims, wherein the individual codes are pseudo-random codes which are preferably based on linear feedback shift registers.

9. An encoder apparatus according to any one of the preceding claims, wherein the individual codes are binary codes.

10. An encoder apparatus according to any one of the preceding claims, wherein the scanning device (19) has a plurality of receiving elements for each of the code tracks (17, 18), wherein the number of receiving elements provided for a code track (17, 18) is preferably at least as large as the resolution of the respective individual code.

11. An encoder apparatus according to any one of the preceding claims, wherein the absolute code is defined exclusively by the first individual code and the second individual code.

12. An encoder apparatus according to any one of the preceding claims, wherein the evaluation unit (21) is configured to determine the absolute position (39) in dependence on the code word (37) of the absolute code by means of a lookup table (33).

13. A method for determining an absolute position (39) of a first object relative to a second object, in which a material measure (15) arranged at the first object is scanned by a scanning device (19) connected to the second object, wherein the material measure (15) has an absolute code having a predefined overall resolution, wherein the absolute position (39) is determined from a code word (37) of the absolute code,
wherein the material measure (15) comprises at least a first code track (17) and a second code track (18) which preferably extends parallel thereto, wherein the code tracks (17, 18) are scanned together, wherein the code tracks (17, 18) have respective individual codes having predefined individual code resolutions and the sum of the individual code resolutions is equal to the predefined overall resolution of the absolute code,
wherein the first code track (17) and the second code track (18) comprise respective row arrangements of a plurality of identical code track segments (27, 29),
wherein the row arrangements of a plurality of identical code track segments (27, 29) have different track lengths and a global zero word (25) or a global one word (45) is added to or inserted into the shorter row arrangement to compensate for the difference,
wherein the code track segments (27) of the first code track (17) are longer or shorter than the code track segments (29) of the second code track (18), and wherein a code word (35) of the first individual code is combined with a code word (36) of the second individual code to determine the code word (37) of the absolute code.

## Revendications

1. Dispositif de détection (11) destiné à déterminer la position absolue (39) d'un premier objet par rapport à un deuxième objet, comprenant une mesure matérialisée (15) disposée sur le premier objet, un dispositif de palpage (19) connecté au deuxième objet et destiné à palper la mesure matérialisée (15), et une unité d'évaluation (21) connectée au dispositif de palpage (19),
dans lequel
la mesure matérialisée (15) présente un code absolu avec une résolution globale prédéterminée, et l'unité d'évaluation (21) est conçue pour déterminer la position absolue (39) en lisant un mot de code (37) du code absolu à partir des signaux reçus du dispositif de palpage (19),
la mesure matérialisée (15) comprend au moins une première piste de code (17) et une deuxième piste de code (18), de préférence parallèle à celle-ci, et le dispositif de palpage (19) est conçu pour palper conjointement les pistes de code (17, 18), les pistes de code (17, 18) présentant des codes individuels respectifs avec des résolutions de code individuel prédéterminées, et la somme des résolutions de code individuel étant égale à la résolution globale prédéterminée du code absolu,
la première piste de code (17) et la deuxième piste de code (18) comprennent des juxtapositions respectives de plusieurs segments de piste de code identiques (27, 29),
les segments de piste de code (27) de la première piste de code (17) sont plus longs ou plus courts que les segments de piste de code (29) de la deuxième piste de code (18), et
l'unité d'évaluation (21) est conçue pour combiner un mot de code (35) du premier code individuel avec un mot de code (36) du deuxième code individuel afin de déterminer le mot de code (37) du code absolu,
les juxtapositions de plusieurs segments de piste de code (27, 29) identiques présentent différentes longueurs de piste, et, en vue de compenser la différence, un mot 'zéro' global (25) ou un mot 'un' global (45) est ajouté à la juxtaposition la plus courte ou est intégré dans celle-ci.

2. Dispositif de détection selon la revendication 1,
dans lequel le code individuel de la première piste de code (17) présente un mot 'zéro', et le code individuel de la deuxième piste de code (18) ne présente pas de mot 'zéro', ou
le code individuel de la première piste de code (17) présente un mot 'un' et le code individuel de la deuxième piste de code (18) ne présente pas de mot 'un'.

3. Dispositif de détection selon la revendication 1 ou 2,
dans lequel le nombre de segments de piste de code identiques (27, 29) de la première piste de code (17) et/ou de la deuxième piste de code (18) est sélectionné en fonction de la longueur d'une zone utilisable pour le palpage du premier objet.

4. Dispositif de détection selon l'une des revendications précédentes,
dans lequel la résolution du code individuel de la première piste de code (17) diffère de la résolution du code individuel de la deuxième piste de code (18) au maximum de trois et de préférence au maximum de un.

5. Dispositif de détection selon l'une des revendications précédentes,
dans lequel le nombre de segments de piste de code identiques (27) de la première piste de code (17) est égal au nombre de segments de piste de code identiques (29) de la deuxième piste de code (18).

6. Dispositif de détection selon l'une des revendications précédentes,
dans lequel la première piste de code (17) et la deuxième piste de code (18) sont de longueur égale et/ou comprennent un nombre égal d'éléments de code (22),
et/ou la première piste de code (17) et la deuxième piste de code (18) comprennent des éléments de code (22) qui présentent une extension de même longueur en direction de la piste.

7. Dispositif de détection selon l'une des revendications précédentes,
dans lequel l'unité d'évaluation (21) est conçue pour déterminer le mot de code (37) du code absolu en concaténant un mot de code (35) du premier code individuel avec un mot de code (36), notamment lu simultanément, du deuxième code individuel.

8. Dispositif de détection selon l'une des revendications précédentes,
dans lequel les codes individuels sont des codes pseudo-aléatoires qui sont de préférence basés sur des registres à décalage à rétroaction linéaire.

9. Dispositif de détection selon l'une des revendications précédentes,
dans lequel les codes individuels sont des codes binaires.

10. Dispositif de détection selon l'une des revendications précédentes,
dans lequel le dispositif de palpage (19) comprend plusieurs éléments de réception pour chacune des pistes de code (17, 18), de préférence, le nombre d'éléments de réception prévus pour une piste de code (17, 18) étant au moins aussi grand que la résolution du code individuel concerné.

11. Dispositif de détection selon l'une des revendications précédentes,
dans lequel le code absolu est défini exclusivement par le premier code individuel et par le deuxième code individuel.

12. Dispositif de détection selon l'une des revendications précédentes,
dans lequel l'unité d'évaluation (21) est conçue pour déterminer la position absolue (39) en fonction du mot de code (37) du code absolu à l'aide d'une table de correspondance (33).

13. Procédé de détermination d'une position absolue (39) d'un premier objet par rapport à un deuxième objet, une mesure matérialisée (15) disposée sur le premier objet étant palpée par un dispositif de palpage (19) connecté au deuxième objet,
dans lequel
la mesure matérialisée (15) présente un code absolu avec une résolution globale prédéterminée, la position absolue (39) étant déterminée à partir d'un mot de code (37) du code absolu,
la mesure matérialisée (15) comprend au moins une première piste de code (17) et une deuxième piste de code (18), de préférence parallèle à celle-ci, les pistes de code (17, 18) sont palpées conjointement,
les pistes de code (17, 18) présentent des codes individuels respectifs avec des résolutions de code individuel prédéterminées, et la somme des résolutions de code individuel est égale à la résolution globale prédéterminée du code absolu,
la première piste de code (17) et la deuxième piste de code (18) comprennent des juxtapositions respectives de plusieurs segments de piste de code identiques (27, 29),
les juxtapositions de plusieurs segments de piste de code (27, 29) identiques présentent différentes longueurs de piste, et, en vue de compenser la différence, un mot 'zéro' global (25) ou un mot 'un' global (45) est ajouté à la juxtaposition la plus courte ou est intégré dans celle-ci.
les segments de piste de code (27) de la première piste de code (17) sont plus longs ou plus courts que les segments de piste de code (29) de la deuxième piste de code (18), et
un mot de code (35) du premier code individuel est combiné avec un mot de code (36) du deuxième code individuel afin de déterminer le mot de code (37) du code absolu.
